(19) Europäisches Patentamt European Patent Office Office européen des brevets

(11) **EP 3 326 934 A1**

(12) **EUROPEAN PATENT APPLICATION**

(43) Date of publication:
**30.05.2018 Bulletin 2018/22**

(51) Int Cl.:
**B65D 81/34** *(2006.01)*    **B65D 81/32** *(2006.01)*
**B65D 75/30** *(2006.01)*

(21) Application number: **17202067.9**

(22) Date of filing: **16.11.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **24.11.2016 JP 2016228098**<br><br>(71) Applicants:<br>• **Unicharm Corporation**<br>  **Ehime 799-0111 (JP)**<br>• **Teikei Ebisu Corporation**<br>  **Miyakonojo-shi, Miyazaki 885-0043 (JP)** | (72) Inventors:<br>• **YOSHIGA, Fumisato**<br>  **Itami-shi, Hyogo 664-0831 (JP)**<br>• **IKEDA, Go**<br>  **Itami-shi, Hyogo 664-0831 (JP)**<br>• **SONODA, Makoto**<br>  **Miyakonojo-shi, Miyazaki 885-0043 (JP)**<br>• **MINAMITANI, Mikayo**<br>  **Miyakonojo-shi, Miyazaki 885-0043 (JP)**<br><br>(74) Representative: **Peter, Julian**<br>**Staeger & Sperling**<br>**Partnerschaftsgesellschaft mbB**<br>**Sonnenstrasse 19**<br>**80331 München (DE)** |

(54) **PET FOOD PACKAGING BODY AND METHOD OF PRODUCING SAME**

(57)    Provided is a pet food packaging body including a packaging container which includes a plurality of accommodating portions, in which a plurality of kinds of pet food are individually accommodated in the accommodating portions of the packaging container.

FIG. 1

EP 3 326 934 A1

## EP 3 326 934 A1

**Description**

BACKGROUND OF THE INVENTION

Field of the Invention

The present invention relates to a pet food packaging body and a method of producing the same.
Priority is claimed on Japanese Patent Application No. 2016-228098, filed on November 24, 2016, the content(s) of which is(are) incorporated herein by reference.

Description of Related Art

As the product form of pet food, there are various forms of products, and examples thereof include a product formed by collectively accommodating pet food in a large bag and a product formed by accommodating pet food in a plurality of small bags and then collectively accommodating the small bags in a large bag.
Patent Literature 1 discloses a pet food packaging body obtained by vacuum-packaging food such as chicken breast meat in a plurality of units piece by piece and separably connecting the plurality of units for the purpose of portability and ease of management.

Documents of Related Art

Patent Literature

[Patent Literature 1] Japanese Unexamined Patent Application, First Publication No. 2004-345716

SUMMARY OF THE INVENTION

An owner of a pet tends to select and purchase pet food that the pet likes to eat, but the pet may be sated with the food in a case where the owner feeds the pet with the same pet food every day.
The present invention provides a pet food packaging body and a method of producing the same, which are suitable for preventing a pet from being sated with pet food or eliminating such a problem.
According to the present invention, there are provided a pet food packaging body and a method of producing the pet food packaging body.

[1] A pet food packaging body including: a packaging container which includes a plurality of accommodating portions, in which a plurality of kinds of pet food are individually accommodated in the accommodating portions of the packaging container.

[2] The pet food packaging body according to [1], in which the packaging container is configured such that a plurality of individual containers each including one accommodating portion are separably connected.

[3] The pet food packaging body according to [2], in which the individual container has a bag shape.

[4] The pet food packaging body according to any one of [1] to [3], in which the moisture content of the pet food is 70% by mass or greater.

[5] The pet food packaging body according to [4], in which the pet food contains solid ingredients and a soup portion.

[6] The pet food packaging body according to [5], in which, among the solid ingredients contained in the pet food, when an ingredient having the highest content is defined as a main ingredient and ingredients other than the main ingredient are defined as auxiliary ingredients, the plurality of kinds of pet food are formed of the same main ingredient and one or more different auxiliary ingredients.

[7] The pet food packaging body according to [5], in which, among the solid ingredients contained in the pet food, when an ingredient having the highest content is defined as a main ingredient and ingredients other than the main ingredient are defined as auxiliary ingredients, the plurality of kinds of pet food are formed of different main ingredients and one or more different auxiliary ingredients.

[8] The pet food packaging body according to [5], in which, among the solid ingredients contained in the pet food, when an ingredient having the highest content is defined as a main ingredient and ingredients other than the main ingredient are defined as auxiliary ingredients, the plurality of kinds of pet food are formed of different main ingredients and the same auxiliary ingredients.

[9] The pet food packaging body according to any one of [2] to [8], in which a display portion which is integrally formed over one individual container and another individual container adjacent thereto, both of which are connected to each other, is provided on a surface of the packaging container.

[10] A method of producing a pet food packaging body, including: filling a plurality of accommodating portions of a packaging container with a plurality of kinds of pet food individually and simultaneously; degassing an inside of each accommodating portion; and sealing the accommodating portions collectively.

According to the present invention, it is possible to provide a pet food packaging body and a method of producing the same, which are suitable for preventing a pet from being sated with pet food or eliminating such a problem.

BRIEF DESCRIPTION OF THE DRAWINGS

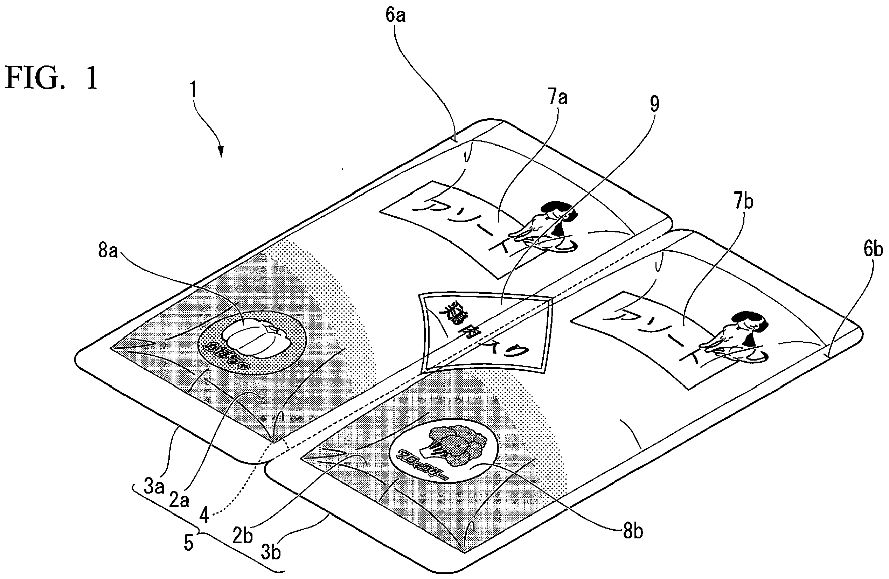

Fig. 1 is a perspective view illustrating a pet food packaging body according to an embodiment of the present invention.

DETAILED DESCRIPTION OF THE INVENTION

In the present specification, the term "pet" indicates an animal that has been bred by a person. In a narrower sense, a pet is an animal cared for by the owner. In addition, the "pet food" indicates feed for pets. The pet food of the present embodiment can be sold as the "feed for animals" or "food for animals."

<Method of measuring moisture content>

The moisture content of the pet food (unit: % by mass) is acquired by a normal pressure heating and drying method. The moisture content acquired by this method includes the moisture in the ingredients (including meat flakes and mock meat pieces)

(Normal pressure heating and drying method)

The mass (W1 gram) of an aluminum weighing can is measured in advance as a constant weight value. A sample is put into the aluminum weighing can and the mass (W2 gram) is weighed. Next, the sample is dried under the conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following equation.

$$\text{Moisture content (unit: \% by mass)} = (W2 - W3) \div (W2 - W1) \times 100$$

<Pet food packaging body>

A pet food packaging body of the present invention is configured such that different kinds of pet food are accommodated in each of a plurality of accommodating portions included a packaging container.

Fig. 1 is a perspective view illustrating a pet food packaging body according to an embodiment of the present invention. The reference numeral 1 represents a pet food packaging body, the reference numerals 2a and 2b respectively represents an accommodating portion, the reference numerals 3a and 3b respectively represents an individual container, and the reference numeral 4 represents a perforation.

A packaging container 5 of a pet food packaging body 1 according to the present embodiment is configured such that two individual containers 3a and 3b in a bag shape respectively having one accommodating portion 2a and one accommodating portion 2b are separably connected to each other by a perforation 4. The four sides of the accommodating portions 2a and 2b of the individual containers 3a and 3b are respectively sealed and pet food is accommodated in each of the accommodating portions 2a and 2b. The pet food in the accommodating portion 2a on one side is different from the pet food in the accommodating portion 2b on the other side. In each of the individual containers 3a and 3b, notches (cuts) 6a and 6b are respectively formed at an opening position.

The packaging container 5 of the present embodiment is formed of a material for retort sterilization.

A surface of the packaging container 5 includes first display portions 7a and 7b which are respectively included in the individual container 3a and the individual container 3b and on which the same drawing pattern is displayed; second display portions 8a and 8b which are respectively included in the individual container 3a and the individual container 3b and on which the different drawing patterns are displayed; and a third display portion 9 on which an integrated drawing pattern is displayed from the individual container 3a to the individual container 3b. That is, the third display portion 9 is provided across the two individual containers 3a and 3b adjacent to each other.

[Pet food]

A preferred embodiment of pet food accommodated in the pet food packaging body 1 is wet type pet food at a moisture content of 70% by mass or greater. Specifically, pet food formed of solid ingredients and a soup portion is preferable. The upper limit of the moisture content is preferably 98% by mass or less and more preferably 90% by mass or less.

The solid ingredients are not particularly limited. Examples of the solid ingredients include meat (such as chicken, beef, lamb, pork, and meat processed products); seafood (such as tuna, bonito, sardine, barracuda, sea bream, flounder, mackerel, horse mackerel, and seafood processed products); milk (such as cow's milk, a milk protein concentrate, and cheese); eggs (such as egg white, egg yolk, and egg processed products); vegetables (such as cabbage, spinach, pumpkin, broccoli, green pepper, carrots, burdock, potatoes, asparagus, soybeans, beans, green peas, and vegetable processed products); cereals (such as wheat, corn, and cereal processed products); and mushrooms (such as shitake mushroom and mushroom).

It is preferable that the ingredients are used in combination of two or more kinds thereof. In the present specification, in a case where two or more ingredients are used, among the solid ingredients contained in the pet food, an ingredient having the highest content is defined as a main ingredient and ingredients other than the main ingredient are defined as auxiliary ingredients.

It is preferable that the main ingredient is one ingredient selected from the group (A) consisting of chicken, meat, lamb, pork, tuna, bonito, sardine, barracuda, sea bream, flounder, mackerel, and horse mackerel.

The content of the main ingredient is preferably in a range of 50% to 99% by mass, more preferably in a range of 60% to 95% by mass, and still more preferably in a range of 70% to 90% by mass with respect to the total content of the solid ingredients.

As the auxiliary ingredients, it is preferable that one or more ingredients other than the main ingredient are selected from the solid ingredients exemplified above and used.

Further, in a case where pet food is formed of two kinds of solid ingredients and the content of each ingredient is 50% by mass, an ingredient included in the group (A) is defined as the main ingredient and the other ingredient which is not included in the group (A) is defined as an auxiliary ingredient. In a case where two kinds of solid ingredients are all included in the group (A), an ingredient having a larger maximum major diameter is defined as the main ingredient and the other ingredient is defined as the auxiliary ingredient.

The soup portion may be in a liquid state or in a gel state. Among substances in a gel state, it is typically said that a substance with a relatively low fluidity is in a jelly state and a substance with a relatively high fluidity is in a gelee state, but there is not clear boundary.

The soup portion contains water, but may contain materials other than water. Examples of the materials other than water include seasonings, thickeners, saccharides, fats and oils, and additives (such as preservatives and palatability enhancers).

The content of water in the soup portion is adjusted such that the moisture content in the entirety of the pet food is set to a desired value.

As the thickeners, known thickeners can be used as appropriate. It is preferable that a thickener contains a polysaccharide thickener.

Examples of the polysaccharide thickener include one or more kinds selected from the group consisting of alginic acid, alginate, alginic acid ester, gum Arabic, curdlan, carrageenan, carboxymethyl cellulose (CMC), locust bean gum, xanthan gum, guar gum, psyllium seed gum, gellan gum, tamarind seed gum, tara gum, pullulan, pectin, methyl cellulose (MC), glucomannan, and mannan.

The pet food of the present embodiment is obtained by mixing the solid ingredients and the soup portion.

Only the materials of the soup portion may be mixed in advance or the ingredients and the materials of the soup portion may be collectively mixed.

The content of the solid ingredients is preferably in a range of 25% to 60% by mass and more preferably in a range of 40% to 50% by mass with respect to the total content of the solid ingredients and the soup portion. In a case where the content of the solid ingredients is greater than or equal to the above-described lower limit, excellent palatability is easily obtained. Further, in a case where the content thereof is less than or equal to the upper limit, excellent workability is easily obtained during a process of filling the accommodating portions 2a and 2b with the pet food.

<Method of producing pet food packaging body>

The pet food packaging body 1 of the present embodiment can be produced according to a method of filling the accommodating portions 2a and 2b of the packaging container 5 with different kinds of pet food individually and simultaneously; degassing the inside of the accommodating portions 2a and 2b; and sealing the accommodating portions 2a and 2b collectively.

According to this method, it is possible to obtain twice the production efficiency when compared to a case where two kinds of pet food packaging bodies are separately produced using a method of filling a packaging container having one accommodating portion with pet food, degassing the inside of the container, and sealing the container. In addition, a process of combining two kinds of pet food packaging bodies which are separately provided and accommodating the packaging bodies in a large bag is unnecessary.

Further, from the viewpoint that the pet food packaging body 1 can be stored in a long period of time, it is preferable that a retort sterilization treatment is performed by carrying out a heat treatment or a pressurizing treatment known in the field after the pet food is sealed with the accommodating portions 2a and 2b of the packaging container 5 formed of a packaging material for retort sterilization. The retort sterilization process is not particularly limited as long as sterilization is carried out under conditions in which the pet food is sufficiently sterilized, and it is preferable that sterilization is carried out under conditions in which the flavor of pet food after the sterilization treatment does not deteriorate. The retort sterilization treatment can be performed using a method of performing a heat treatment in a temperature range of 110°C to 130°C for 20 minutes to 50 minutes.

The pet food packaging body 1 of the present embodiment is configured such that two kinds of pet food are respectively and individually accommodated in the accommodating portions 2a and 2b.

Accordingly, for example, in the meal for one day, the owner can feed a pet with pet food accommodated in the accommodating portion 2a on one side during the first meal and then feed the pet with the other pet food accommodated in the accommodating portion 2b on the other side during the second meal. In this manner, it is possible to easily prevent a pet from being continuously fed with the same pet food. Therefore, it is possible to prevent a pet from being sated with the pet food or eliminate such a problem.

Particularly, the pet food of the present embodiment is of a wet type and is suitable for a method of feeding a pet with pet food obtained by mixing wet type pet food with granular pet food. It is possible to prevent a pet from being sated with pet food or eliminate such a problem by mixing wet type pet food with granular pet food that is usually provided for the pet so that the flavor of the pet food is changed.

In a case where the kind of granular pet food itself is changed when a pet is sated with the granular pet food which is usually provided for the pet, the pet may not eat at all.

Further, there is a tendency that a pet prefers (high palatability) wet type pet food rather than granular pet food. Accordingly, stable palatability is easily obtained even when the taste of wet type pet food is changed.

Since it is possible to prevent a pet from being sated with pet food or eliminate such a problem without changing the type of granular pet food itself, it is preferable that the pet food of the present embodiment is provided for a pet as a mixture with granular pet food.

The pet food which includes a soup portion in a jelly state or in a gelee state is suitable for preventing a pet from being sated with pet food or eliminating such a problem since the pet food is easily entangled with granular pet food.

In the pet food packaging body 1 of the present embodiment, one or more from among the main ingredients, the auxiliary ingredients, and the soup portions are different from each other between the two kinds of pet food respectively accommodated in the accommodating portions 2a and 2b.

For example, a mode (i) in which the main ingredients are the same as each other and one or more auxiliary ingredients are different from each other; a mode (ii) in which the main ingredients are different from each other and one or more auxiliary ingredients are different from each other, or a mode (iii) in which the main ingredients are different from each other and the auxiliary ingredients are the same as each other may be employed.

Alternatively, a mode (iv) in which the main ingredients are the same as each other, the auxiliary ingredients are the same as each other, and the compositions of the soup portions are different from each other may be employed. In a case where the compositions of the soup portions are different from each other, it is preferable that one or both of the flavor and the fluidity between the soup portions are different from each other.

Since a pet has a strong palatability, the pet may eat less or may not eat at all in a case where the taste of pet food is changed. For this reason, there is a tendency that the owner of a pet is cautious about changing the taste of pet food and continuously purchases the same pet food that is preferred by the pet. However, according to the findings of the present inventors, in a case where the same pet food is provided for a pet every day, a problem in that there is no change in meal so that the pet is sated with the pet food and a problem in that the owner's request to provide various kinds of food from the viewpoint of the nutritional balance is not satisfied may occur.

According to the mode (i), since the main ingredients of a plurality of kinds of pet food accommodated in the pet food packaging body are same as each other and the auxiliary ingredients thereof are different from each other, this mode is preferable from the viewpoint that the palatability of a pet is stably maintained and the meal can be easily changed. Therefore, it is possible to prevent a pet from being sated with pet food or eliminate such a problem and the owner can be easily satisfied with providing a meal with different food materials without providing the same pet food every day.

According to the mode (ii), since the main ingredients of a plurality of kinds of pet food accommodated in the pet food packaging body are different from each other and the auxiliary ingredients thereof are different from each other, this mode is preferable from the viewpoint that the meal can be easily changed. Particularly, it is easy to obtain satisfaction of the owner who wants to provide various kinds of food materials.

According to the mode (iii), since the main ingredients of a plurality of kinds of pet food accommodated in the pet food packaging body are different from each other and the auxiliary ingredients thereof are the same as each other, this mode is preferable from the viewpoint that the meal can be easily changed. Particularly, it is easy to obtain satisfaction of the owner who wants to provide variation to the main ingredients.

According to the mode (iv), since the main ingredients of a plurality of kinds of pet food accommodated in the pet food packaging body are the same as each other and the auxiliary ingredients thereof are the same as each other, this mode is preferable from the viewpoint that the meal can be easily changed while stably maintaining the palatability of a pet.

In the present embodiment, it is preferable that an amount of pet food to be used in one occasion is accommodated in each of the accommodating portions 2a and 2b. It is not necessary to preserve the unused portion after opening in a case where the amount of pet food is set to an amount to be used in one occasion. Therefore, it is possible to easily maintain the freshness.

For example, the amount of wet type pet food to be used in one occasion in a case where the pet food is used as a mixture with granular pet food is preferably in a range of 20 to 40 g and more preferably in a range of 25 to 35 g.

The pet food packaging body 1 of the present embodiment is preferable in terms of hygiene because two individual containers 3a and 3b can be easily separated from each other due to the perforation 4 so that the individual containers 3a and 3b can be disposed immediately after use. The portion where two individual containers 3a and 3b are connected with each other is not limited as long as the two individual containers 3a and 3b can be easily separated from each other. Further, a weakening line other than the perforation may be provided.

In the pet food packaging body 1 of the present embodiment, an integrated display portion (third display portion 9) extending over two individual containers 3a and 3b can be provided by connecting the two individual containers 3a and 3b with each other. Therefore, the area of the display portion (third display portion 9) can be increased and the visibility can be improved.

In the pet food packaging body 1 of the present embodiment, the second display portions 8a and 8b having different drawing patterns can be respectively provided in two individual containers 3a and 3b, and thus the degree of freedom in design is high.

Further, the pet food packaging body 1 of the present embodiment includes two accommodating portions 2a and 2b, but the number of accommodating portions may be 3 or greater. In a case where the number of accommodating portions 3 or greater, it is preferable that the accommodating portions are filled with three or more kinds of pet food. It is preferable that the number of accommodating portions is the same as the number of kinds of pet food.

Further, the individual containers 3a and 3b of the pet food packaging body 1 of the present embodiment respectively have a bag shape, but the shape thereof is not limited to a bag shape. For example, a shape in which a plurality of individual containers respectively having a bottomed hollow shape and an opening sealed with a film are separably connected to each other may be employed.

[Examples]

Hereinafter, the present invention will be described in detail with reference to the following examples, but the present invention is not limited to these examples.

As the solid ingredients, the following ingredients were used.

Chicken: flaky chicken
Cheese: processed cheese formed in a dice shape
Beef: beef formed in a dice shape
Chicken cartilage: fined minced chicken cartilage
Pumpkin: pumpkin cut into a dice shape
Broccoli: broccoli cut into a dice shape
Other vegetables: a mixture of chopped carrots, beans, and cabbage

(Production Examples 1 to 8)

The solid ingredients and the materials of the soup portion were mixed according to the formulation listed in Table 1 under a temperature condition of 25°, thereby preparing wet type pet food. The moisture content of each pet food was approximately 85% by mass.

(Examples 1 to 4)

Pet food packaging bodies were produced by respectively combining two kinds of pet food produced in Production Examples 1 to 8. As the packaging container, the packaging container 5, formed of a packaging material for retort sterilization, in the shape illustrated in Fig. 1 was used.

The two accommodating portions 2a and 2b of the packaging container 5 were respectively and simultaneously filled with 30 g of pet food listed in Table 2, the inside of the accommodating portions was degassed, and the pet food was heat-sealed and subjected to a heat treatment at 118°C for 20 to 25 minutes (retort treatment), thereby obtaining pet food packaging bodies.

[Table 1]

| | | Production Example 1 | Production Example 2 | Production Example 3 | Production Example 4 | Production Example 5 | Production Example 6 | Production Example 7 | Production Example 8 |
|---|---|---|---|---|---|---|---|---|---|
| Solid ingredients [% by mass] | Chicken | 42.5 | 39.0 | 44.0 | 43.0 | 40.0 | 39.5 | 36.0 | 40.0 |
| | Cheese | 1.5 | - | - | - | - | 1.5 | - | - |
| | Beef | - | 5.0 | - | - | - | - | 5.0 | - |
| | Chicken cartilage | - | - | - | - | - | - | - | 1.0 |
| | Pumpkin | - | - | 2.0 | - | - | - | - | - |
| | Broccoli | - | - | - | 3.0 | 3.0 | - | - | - |
| | Other vegetables | 6.0 | 6.0 | 4.0 | 4.0 | 4.0 | 6.0 | 6.0 | 6.0 |
| Materials of soup portion [%] by mass] | Water | 47.4 | 47.4 | 47.4 | 47.4 | 50.0 | 50.0 | 50.0 | 50.0 |
| | Seasonings | 1.75 | 1.75 | 1.75 | 1.75 | 1.86 | 1.86 | 1.86 | 1.86 |
| | Polysaccharide thickeners | 0.80 | 0.80 | 0.80 | 0.80 | 0.91 | 0.91 | 0.91 | 0.91 |
| | Potassium chloride | 0.05 | 0.05 | 0.05 | 0.05 | - | - | - | - |
| | Calcium lactate | - | - | - | - | 0.05 | 0.05 | 0.05 | 0.05 |
| | Saccharides | - | - | - | - | 0.15 | 0.15 | 0.15 | 0.15 |
| Total amount [% by mass] | | 100 | 100 | 100 | 100 | 100 | 100 | 100 | 100 |
| Proportion of solid ingredients [% by mass] | | 50 | 50 | 50 | 50 | 47 | 47 | 47 | 47 |
| Proportion of soup portion [% by mass] | | 50 | 50 | 50 | 50 | 53 | 53 | 53 | 53 |
| Moisture content [% by mass] | | 85 | 85 | 85 | 85 | 85 | 85 | 85 | 85 |
| Name of pet food | | (1) Cheese -containing jelly type | (2) Beef- containing type | (3) pumpkin -containing jelly type | (4) Broccoli -containing jelly type | (5) Broccoli -containing gelee type | (6) Cheese -containing gelee type | (7) Beef- containing gelee type | (8) Chicken gristles -containing gelee type |

[Table 2]

| | Pet food packaging body | |
|---|---|---|
| | Accommodating portion 2a on one side | Accommodating portion 2b on the other side |
| Example 1 | (1) Cheese-containing jelly type | (2) Beef-containing jelly type |
| Example 2 | (3) pumpkin-containing jelly type | (4) Broccoli-containing jelly type |
| Example 3 | (5) Broccoli-containing gelee type | (6) Cheese-containing gelee type |
| Example 4 | (7) Beef-containing gelee type | (8) Chicken gristles-containing gelee type |

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

EXPLANATION OF REFERENCES

1: pet food packaging body

2a, 2b: accommodating portion

3a, 3b: individual container

4: perforation

5: packaging container

6a, 6b: notch (cut)

7a, 7b: first display portion

8a, 8b: second display portion

9: third display portion

**Claims**

1. A pet food packaging body comprising:

   a packaging container which includes a plurality of accommodating portions,
   wherein a plurality of kinds of pet food are individually accommodated in the accommodating portions of the packaging container.

2. The pet food packaging body according to claim 1,

   wherein the packaging container is configured such that a plurality of individual containers each including one accommodating portion are separably connected.

3. The pet food packaging body according to claim 2,

   wherein the individual container has a bag shape.

**4.** The pet food packaging body according to any one of claims 1 to 3,

wherein the moisture content of the pet food is 70% by mass or greater.

**5.** The pet food packaging body according to claim 4,

wherein the pet food contains solid ingredients and a soup portion.

**6.** The pet food packaging body according to claim 5,

wherein, among the solid ingredients contained in the pet food, when an ingredient having the highest content is defined as a main ingredient and ingredients other than the main ingredient are defined as auxiliary ingredients, the plurality of kinds of pet food are formed of the same main ingredient and one or more different auxiliary ingredients.

**7.** The pet food packaging body according to claim 5,

wherein, among the solid ingredients contained in the pet food, when an ingredient having the highest content is defined as a main ingredient and ingredients other than the main ingredient are defined as auxiliary ingredients, the plurality of kinds of pet food are formed of different main ingredients and one or more different auxiliary ingredients.

**8.** The pet food packaging body according to claim 5,

wherein, among the solid ingredients contained in the pet food, when an ingredient having the highest content is defined as a main ingredient and ingredients other than the main ingredient are defined as auxiliary ingredients, the plurality of kinds of pet food are formed of different main ingredients and the same auxiliary ingredients.

**9.** The pet food packaging body according to any one of claims 2 to 8,

wherein a display portion which is integrally formed over one individual container and another individual container adjacent thereto, both of which are connected to each other, is provided on a surface of the packaging container.

**10.** A method of producing a pet food packaging body, comprising:

filling a plurality of accommodating portions of a packaging container with a plurality of kinds of pet food individually and simultaneously;
degassing an inside of each accommodating portion; and
sealing the accommodating portions collectively.

FIG. 1

EP 3 326 934 A1

Europäisches
Patentamt

European
Patent Office

Office européen
des brevets

**EUROPEAN SEARCH REPORT**

Application Number

EP 17 20 2067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2004 345716 A (NISSHINSHA KK; PET S MOUNTAIN KK) 9 December 2004 (2004-12-09) | 1-3,9,10 | INV. B65D81/34 |
| Y | * abstract; figures 1-3 * | 4-8 | B65D81/32 B65D75/30 |
| X | US 2003/178339 A1 (DE MARCO PETER F [US]) 25 September 2003 (2003-09-25) | 1-3,9,10 | |
| Y | * 0009, 0014- 0017; figures 1-3 * | 4-8 | |
| X | US 5 925 390 A (KORNACKI JOAN M [US]) 20 July 1999 (1999-07-20) * column 3, line 10 - column 4, line 37; figures 1-4 * | 1,10 | |
| Y | US 2016/128361 A1 (ICHIHASHI MASAKI [JP] ET AL) 12 May 2016 (2016-05-12) * paragraph [0022] - paragraph [0031] * * paragraph [0077] * * paragraph [0094] * * paragraph [0097] - paragraph [0103] * | 4-8 | |
| A | WO 2015/132195 A1 (AMCOR FLEXIBLES ITALIA SRL [IT]) 11 September 2015 (2015-09-11) * paragraph [0001]; figures 1-12 * | 1-10 | TECHNICAL FIELDS SEARCHED (IPC) B65D |

The present search report has been drawn up for all claims

| Place of search | Date of completion of the search | Examiner |
|---|---|---|
| Munich | 2 March 2018 | Ngo Si Xuyen, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 2067

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2018

| Patent document cited in search report | | Publication date | Patent family member(s) | | Publication date |
|---|---|---|---|---|---|
| JP 2004345716 | A | 09-12-2004 | NONE | | |
| US 2003178339 | A1 | 25-09-2003 | NONE | | |
| US 5925390 | A | 20-07-1999 | NONE | | |
| US 2016128361 | A1 | 12-05-2016 | CA | 2914219 A1 | 11-12-2014 |
| | | | CN | 105307504 A | 03-02-2016 |
| | | | EP | 3005880 A1 | 13-04-2016 |
| | | | JP | 5951128 B2 | 13-07-2016 |
| | | | JP | WO2014196595 A1 | 23-02-2017 |
| | | | US | 2016128361 A1 | 12-05-2016 |
| | | | WO | 2014196595 A1 | 11-12-2014 |
| WO 2015132195 | A1 | 11-09-2015 | EP | 3114043 A1 | 11-01-2017 |
| | | | US | 2017174416 A1 | 22-06-2017 |
| | | | WO | 2015132195 A1 | 11-09-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016228098 A

- JP 2004345716 A